# EUROPEAN PATENT APPLICATION

(11) **EP 2 445 208 A1**
(43) Date of publication of application: **25.04.2012**
(21) Application number: 09845970.4
(22) Date of filing: 19.06.2009
(51) Int. Cl.: H04N 7/14

(54) **GENERATION METHOD OF ELECTRONIC PROGRAM GUIDE MENU OF TELEVISION AND TV SET**

(71) Applicant: Shenzhen TCL New Technology Co., LTD, Nanshan District Shenzhen Guangdong 518067 (CN)
(72) Inventor: HUANG, Yaru, Shenzhen Guangdong 518067 (CN); FU, Yaoyuan, Shenzhen Guangdong 518067 (CN); WANG, Hua, Shenzhen Guangdong 518067 (CN); ZUO, Bo, Shenzhen Guangdong 518067 (CN)
(74) Representative: Manitz, Finsterwald & Partner GbR
(86) International application number: PCT/CN2009/000680
(87) International publication number: WO 2010/145056

(57) **Abstract**

A generating method of generating an electronic program guide menu of a television includes the following steps: providing a main tuner for receiving a first television signal of a current channel and providing at least one vice tuner for receiving at least one second television signal of at least one browsing channel; and generating the electronic program guide menu which includes program picture of the current channel and at least one program picture of the at least one browsing channel according to the first television signal and the at least one second television signal. With the present disclosure, the electronic program guide menu which is convenient and of plenty of information is provided to allow viewers to browse the browsing channel as well as allow viewers to watch the program of the current channel at the same time.

## Description

### BACKGROUND

### 1. Technical Field

The present disclosure relates to television technologies, and particularly, to a television and a generating method of an electronic program guide thereof.

### 2. Description of Related Arts

With the rapid development of the telecommunication and information technology, the whole television broadcasting industry chain has gone through reforms among which the digitalization of televisions is vital. With the all-round digitalization of the televisions, the conventional television medium has been combined with the telecommunication technology and the information technology technically and functionally to form the new and big digital industry.

A digital television not only can provide video programs or audio programs of high quality, but also can provide various programs in various and flexible ways. The digital television often includes an electronic program guide (EPG) menu for providing viewers scheduling information for current and upcoming programs such that the viewers can find the programs of interest via browsing the EPG menu. However, in the conventional EPG menu, only the program picture and the program information of one channel are displayed in the EPG menu. When viewers need to know the program information of a target channel, they often need to select the target channel to allow the program picture and the program information of the target channel to be displayed, which is convenient for the selection of a desired channel. Additionally, the program picture of the current channel which the viewer is watching cannot be displayed.

Therefore, there is room for improvement.

### SUMMARY

One object of the present invention is to provide a generating method of generating an electronic program guide menu of a television.

The generating method includes the following steps:
providing a main tuner for receiving a first television signal of a current channel and providing at least one vice tuner for receiving at least one second television signal of at least one browsing channel; and
generating an electronic program guide menu including program picture of the current channel and at least one program picture of the at least one browsing channel according to the first television signal and the second television signal.

Preferably, the electronic program guide menu further includes a program information of the current channel and a program information of the at least one browsing channel.

Preferably, the step of providing at least one vice tuner for receiving at least one second television signal of at least one browsing channel includes:
inputting the frequency data of the browsing channels to the vice tuner sequentially, and receiving the television signals of the browsing channels via the vice tuner sequentially.

Preferably, the program picture of the browsing channels displayed in the electronic program guide menu is capable of being updated according to the at least one second television signal received by the vice tuner.

Preferably, wherein the first step includes providing a main tuner for receiving the first television signal of the current channel, and providing at least two of the vice tuners for receiving the second television signals of at least two of the browsing channels respectively; the second step includes generating the electronic program guide menu including the program pictures of the current channel and the program pictures of the at least two browsing channels according to the first television signal and the second television signals of the at least two browsing channels.

The present disclosure further provides a television including a storage for storing frequency data of a current channel and frequency data of at least one browsing channel; a main tuner for receiving the frequency data and a first television signal of the current channel; a vice tuner for receiving the frequency data and at least one second television signal of the at least one browsing channel; a micro control unit for reading the frequency data of the current channel from the storage and outputting the frequency data of the current channel to the main tuner, reading the frequency data of the at least one browsing channel from the storage and outputting the frequency data of the at least one browsing channel to the vice tuner; and an electronic program guide menu generating module. The micro control unit further outputs program pictures of the current channel and program picture of the at least one browsing channel to the electronic program guide menu generating module and controlling the electronic program guide menu generating module to generate an electronic program guide menu.

Preferably, the television includes at least two browsing channels and at least two vice tuners, the micro control unit reads the frequency data of the at least two browsing channels from the storage and outputs the frequency data to the at least two vice tuners respectively, the at least two vice tuners receives television signals of the at least two browsing channels respectively, and the electronic program guide menu comprises the program pictures of the at least two browsing channels.

Preferably, the micro control unit is further used for reading the frequency data of the at least two subsequent browsing channels and outputting the frequency data of the at least two subsequent browsing channels to the at least two vice tuners respectively, the electronic program guide generating module is further used for updating the electronic program guide menu by replacing the program pictures of the at least two browsing channels with that of the at least two subsequent browsing channels.

Preferably, the micro control unit is further used for obtaining program information of the current channel and program information of the at least one browning channel, and the electronic program guide menu further includes the program information of the current channel and the at least one browsing channel.

Preferably, the micro control unit is further used for outputting the frequency data of the at least one browsing channel to the main tuner to allow the at least one second television signal to be received by the main tuner based on a channel switching control command.

With the present disclosure, the vice tuner of the television is capable of receiving the second television signal of each browsing channel. Thus, the program picture of each browsing channel can be displayed in the EPG menu after the first television signal is processed. Also, the main tuner is capable of receiving the first television signal to allow the program picture of the current channel to be displayed in the EPG menu. Therefore, when viewers browse the browsing channels, they can watch the program played in the current channel via the EPG menu, which is convenient and easily operated.

### DESCRIPTION OF THE DRAWINGS

Many aspects of the embodiments can be better understood with reference to the following drawings. The components in the drawings are not necessarily dawns to scale, the emphasis instead being placed upon clearly illustrating the principles of the embodiments. Moreover, in the drawings, like reference numerals designate corresponding parts throughout the several views.
FIG 1 is a schematic view of an electronic program guide (EPG) menu of a television in accordance with an embodiment of the present disclosure.
FIG 2 is a flow chart of a generating method of the EPG menu of FIG 1.
FIG 3 is a block diagram of the television of FIG 1.

### DETAILED DESCRIPTION

The disclosure is illustrated by way of example and not by way of limitation in the figures of the accompanying drawings in which like references indicate similar elements. It should be noted that references to "an" or "one" embodiment is this disclosure are not necessarily to the same embodiment, and such references mean at least one.

In an embodiment of the present invention, when an electronic program guide (EPG) menu is executed and displayed, at least one television signal of at least one browsing channel (any other channel except a current channel being watched by viewers) is received by a vice tuner, and further is processed to allow a program picture of the at least one browsing channel to be displayed in the EPG menu. Meanwhile, the television signal of the current channel is also received to allow the program picture of the current channel to be displayed in the EPG menu.

The EPG menu displays only one program picture of the browsing channel or displays a number of program pictures of the browsing channels. If the EPG menu displays a number of the program pictures of the browsing channels, the television can include only one vice tuner for receiving the television signals of the browsing channels sequentially, or can include a number of vice tuners for receiving the television signals of the browsing channels simultaneously. That is, each vice tuner receives the television signal of one browsing channel.

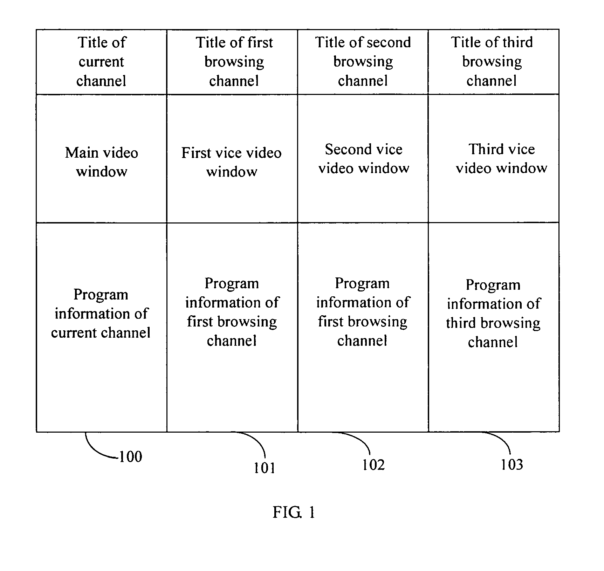

Suppose the television includes three browsing channels: a first browsing channel 1, a second browsing channel 2, and a third browsing channel 3. Referring to FIG 1, in the embodiment, the EPG menu includes a main displaying area 100 for displaying information of the current channel, a first vice displaying area 101, a second vice displaying area 102, and a third vice displaying area 103 for respectively displaying the information of the first browsing channel 1, the second browsing channel 2, and the third browsing channel 3.

The main displaying area 100 includes a main title bar for displaying a title of the current channel, a main video window for displaying a program picture of the current channel, and a main information bar for displaying program information of the current channel.

The first vice displaying area 101 includes a first title bar for displaying the title of the first browsing channel 1, a first vice video window for displaying the program picture of the first browsing channel 1, and a first information bar for displaying the program information of the first browsing channel 1.

The second vice displaying area 102 includes a second title bar for displaying the title of the second browsing channel 2, a second vice video window for displaying the program picture of the second browsing channel 2, and a second information bar for displaying the program information of the second browsing channel 2.

The third vice displaying area 103 includes a third title bar for displaying the title of the third browsing channel 3, a third vice video window for displaying the program picture of the third browsing channel 3, and a third information bar for displaying the program information of the third browsing channel 3.

When viewers want to browse other channels, the EPG menu can be executed. At this time, the main tuner keeps receiving frequency data of the current channel to allow the television signal of the current channel to be processed by the television. Thus, the program picture, the program information, and the title of the current channel can be displayed in the main displaying area 100. Meanwhile, the frequency data of the three browsing channels 1, 2, and 3 are respectively inputted to the vice tuner. In some embodiments, the television only includes one vice tuner, therefore, the frequency data of the three browsing channels 1, 2, and 3 are inputted to the vice tuner sequentially. For example, the frequency data of the first browsing channel 1 is inputted to the vice tuner firstly, and the television signal of the first browsing channel 1 is processed to allow the display of the program picture, the display of the program information, and the display of the title thereof.

After a predetermined time period, the frequency data of the second browsing channel 2 is inputted into the vice tuner. Thus, the television signal of the second browsing channel 2 is processed to allow the display of the title, the program picture, and the program information thereof in the second vice displaying area 102 respectively.

The title, the program picture, and the program information of the third browsing channel 3 are then displayed in the third vice displaying area 103 in the same way as that of the first and second browsing channel 1, 2 do.

When the vice tuner switches from the first browsing channel 1 to the second browsing channel 2, a last frame picture of the first browsing channel 1 is displayed in the first vice video window. The last frame picture is static. Accordingly, the program information and the title of the first browsing channel 1 are also displayed in the first information bar and the first title bar respectively. The situations can also be applied when the vice tuner switches from the second browsing channel 2 to the third browsing channel 3.

After the EPG menu is displayed, views can browse the program picture of the browsing channels 1, 2, and 3 via the three vice displaying areas 101, 102, and 103 respectively. Therefore, viewers can decide whether to switch channels according to the program information of the browsing channels. If the viewers find the programs played in the three browsing channels 1, 2, and 3 of no interest, they can continuously to browse the information of other channels. Viewers can push a channel up or down button on a controller of the television to browse subsequent to-be-browsed channels including anterior channels or posterior channels. When users want to browse the posterior channels, the frequency data of another channel such as a forth browsing channel 4 is inputted to the vice tuner and the television signal thereof is processed. After that, the information of the forth browsing channel 4 is displayed in the first vice displaying area 101 by replacing the information of the first browsing channel 1. Specifically, the title of the forth browsing channel 4 is displayed in the first title bar, the program picture thereof is displayed in the first vice video window, and the program information thereof is displayed in the first information bar.

Similarly, when viewers want to browse another posterior channel such as a fifth browsing channel 5, the frequency data of the fifth browsing channel 5 is inputted to the vice tuner. The information of the fifth browsing channel 5 is displayed in the second vice displaying area 102 by replacing the information of the second browsing channel 2, after the television signal of the fifth browsing channel 5 is processed. Specifically, the title of the fifth browsing channel 5 is displayed in the second title bar, the program information of the fifth browsing channel 5 is displayed in the second vice video window, and the program picture of the fifth browsing channel 5 is displayed in the second information bar.

Similarly, views can browse program pictures of other channels and obtain the program information of other channels, while keeping watching the program picture of the current channel in the above way.

In some embodiments, the television can update the program picture and the program information of the browsing channels automatically without the engagement from the viewers. That is, although no commands from the viewers are inputted in the predetermined time period, the television is still capable of inputting the frequency data of the subsequent to-be-browsed channels to the vice tuner to allow the television signals of the subsequent to-be-browsed channels to be processed. Therefore, the television is capable of updating the program picture and program information displayed in the EPG menu. In this state, after a time duration, the EPG menu is updated by replacing the information of the three browsing channels 1, 2, and 3 with the information of another three browsing channels 4, 5, and 6 respectively. For the television with a number of vice tuners such as three vice tuners, when the EPG menu is executed, the frequency data of the three browsing channels 1, 2, and 3 are respectively inputted to the vice tuners simultaneously to define the EPG menu as shown in FIG 1. At this time, if viewers hope to obtain the information of other browsing channels, they can select the anterior channels or the posterior channels via the controller or a control panel of the television. If viewers select the posterior channels, the frequency data of the forth browsing channel 4, the fifth browsing channel 5, and the sixth browsing channel 6 are respectively inputted to the three vice tuners to allow the information displayed in the EPG menu to be updated.

If viewers find the program of one of the browsing channels such as the third browsing channel 3 of interest, they can switch the current channel to the third browsing channel by pushing a confirm button on the controller of the television after selecting the title or the program picture of the third browsing channel 3. At this time, the frequency data of the third browsing channel 3 is inputted into the main tuner, and the television signal thereof is received by the main tuner to allow the play of the program of the third browsing channel 3. After that, the EPG menu disappears to allow viewers to watch the program of the third browsing channel 3.

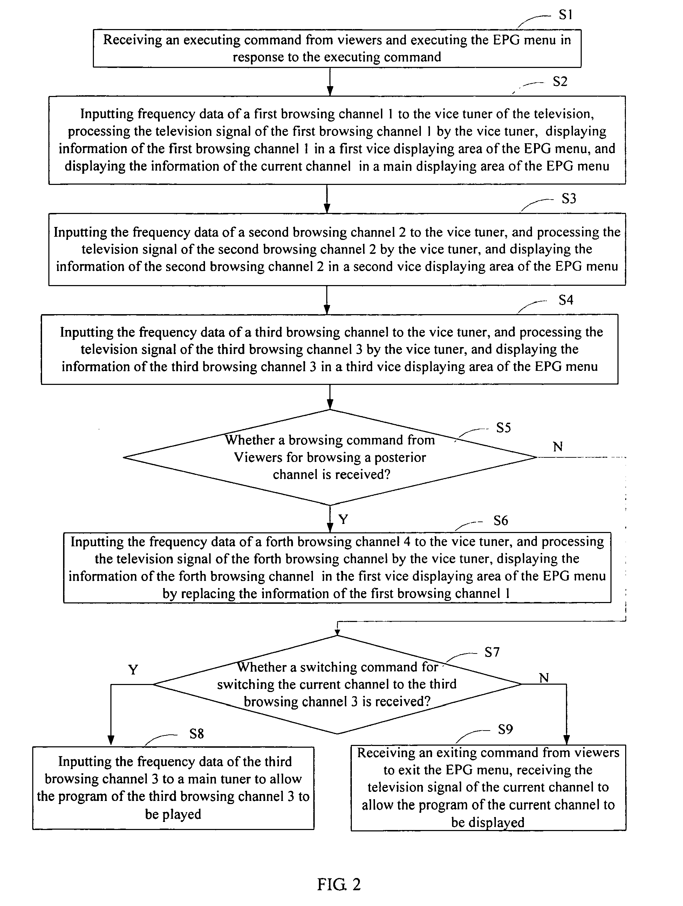

Referring to FIG. 2, a generating method of the EPG menu of the television is provided. The generating method includes the following steps:
In step S1, receiving an executing command from viewers and executing the EPG menu in response to the executing command;

In step S2, inputting frequency data of a first browsing channel 1 to the vice tuner of the television, and receiving the television signal of the first browsing channel 1 via the vice tuner, thus, information of the first browsing channel 1 is capable of being displayed in a first vice displaying area of the EPG menu with the information of the current channel being displayed in a main displaying area of the EPG menu.

In step S3, inputting the frequency data of a second browsing channel 2 to the vice tuner, and receiving the television signal of the second browsing channel 2 via the vice tuner, thus, the information of the second browsing channel 2 can be displayed in a second vice displaying area of the EPG menu.

In step S4, inputting the frequency data of a third browsing channel to the vice tuner, and receiving the television signal of the third browsing channel 3 via the vice tuner, thus, the information of the third browsing channel 3 can be displayed in a third vice displaying area of the EPG menu.

In step S5, determining whether a browsing command from viewers for browsing an posterior channel is received? If the browsing command is received, the step S6 is implemented. Otherwise, the step S7 is implemented.

In step S6, inputting the frequency data of a forth browsing channel 4 to the vice tuner, and receiving the television signal of the forth browsing channel by the vice tuner, thus, the information of the forth browsing channel can be displayed in the first vice displaying area of the EPG menu by replacing the information of the first browsing channel 1.

In step S7, determining whether a switching command for switching the current channel to the third browsing channel 3 is received? If the switching command is received, the step S8 is implemented. Otherwise, the step S9 is implemented.

In step S8, inputting the frequency data of the third browsing channel 3 to a main tuner to allow the program of the third browsing channel 3 to be played.

In step S9, receiving an exiting command from viewers to exit the EPG menu, receiving the television signal of the current channel to allow the program of the current channel to be displayed.

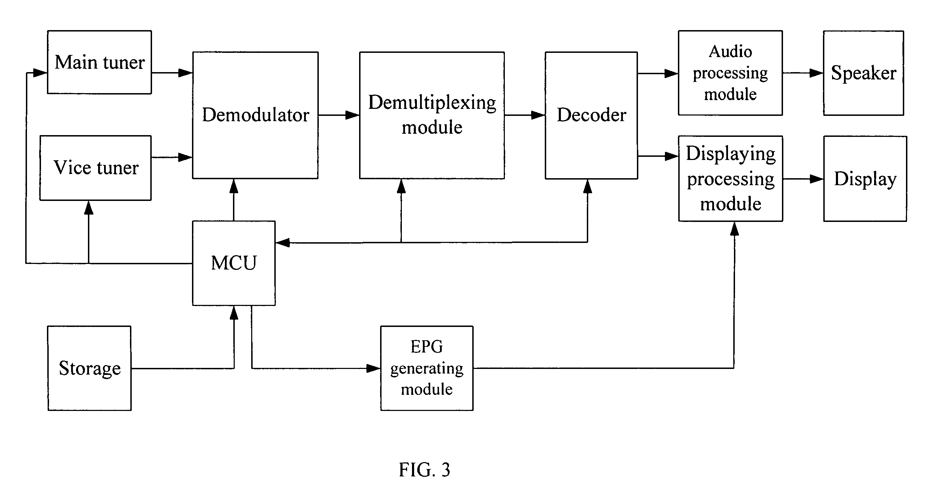

Referring to FIG. 3, a television in the embodiment includes a main tuner, a vice tuner, a demodulator, a demultiplexing module, a decoder, a micro control unit (MCU), a storage, an electronic program guide (EPG) generating module, a displaying processing module, an audio processing module, a speaker, and a display.

The main tuner is electrically connected to the demodulator and the MCU for receiving frequency data of the current channel which is being watched and further for receiving television signal corresponding to the current channel.

The vice tuner is electrically connected to the demodulator and the MCU for receiving the frequency data of at least one browsing channel (any other channel except the current channel) and receiving at least one television signal of the at least one browsing channel. The television in the embodiment can include a first browsing channel 1, a second browsing channel, and a third browsing channel 3. In some embodiments, the television can include only one vice tuner for receiving the television signals of the three browsing channels 1, 2, 3 sequentially. In other embodiments, the television may include a number of such as three vice tuners for respectively receiving the television signals of the three browsing channels simultaneously. For example, the television signals of the three browsing channels 1, 2, and 3 are respectively received by the three vice tuners simultaneously, and the television signals of another three browsing channels 4, 5, and 6 are respectively received by the three vice tuners after a period.

The demodulator is electrically connected to the MCU and the demultiplexing module for demodulating the television signals received by the main tuner and the vice tuner respectively. The transport streams corresponding to the current channel and the browsing channels are demodulated from a high frequency carrier carrying the television signals.

The demultiplexing module is electrically connected to the MCU and the demodulator for separating data packages of different programs from the transport streams.

The decoder is electrically connected to the MCU, the audio processing module, and the displaying processing module for decoding the television signals of the current channel and the browsing channels.

The MCU is electrically connected to the storage and the EPG generating module for controlling the operation of the television. For example, the MCU is capable of reading the frequency data of the current channel from the storage and outputting the frequency data to the main tuner, and controlling the main tuner to receive the television signal of the current channel. Also, the MCU is capable of reading the frequency data of each browsing channel from the storage and outputting the frequency data to the vice tuner, and controlling the vice tuner to receive the television signal of each browsing channel. Additionally, the MCU is capable of obtaining program picture and program information of each browsing channel from the decoder, inputting the program picture and the program information to the EPG generating module, and controlling the EPG generating module to generate an EPG menu.

The storage is used for storing the frequency data of the current channel and each browsing channel.

The EPG generating module is electrically connected to the displaying processing module for generating the EPG menu according to the program information and the program picture of the current channel and each browsing channel, and outputting the EPG menu to the displaying processing module.

The displaying processing module is electrically connected to the display for processing the EPG menu.

The display is used for displaying the EPG menu. The EPG menu includes a main displaying area 100 for displaying information of the current channel, a first vice displaying area 101, a second vice displaying area 102, and a third vice displaying area 103 for displaying the information of the first browsing channel 1, the second browsing channel 2, and the third browsing channel 3 respectively.

The audio processing module and the speaker have the same function and structure as the conventional one.

When viewers want to browse an posterior channel such as a forth browsing channel 4, the MCU outputs the frequency data of the forth browsing channel 4 to the vice tuner. Thus the television signal of the browsing channel 4 can be received by the vice tuner and further be demodulated, demultiplexed, and decoded. Therefore, the information of the forth browsing channel 4 is transmitted to the EPG generating module and is displayed in the first vice displaying area 102 by replacing the information of the first browsing channel 1.

It is understandable that in some embodiments, the information of the current channel or each browsing channel includes the title, the stating and ending time of the program played on the current channel or each browsing channel.

Even though information and the advantages of the present embodiments have been set forth in the foregoing description, together with details of the mechanisms and functions of the present embodiments, the disclosure is illustrative only; and that changes may be made in detail, especially in matters of shape, size, and arrangement of parts within the principles of the present embodiments to the full extend indicated by the broad general meaning of the terms in which the appended claims are expressed.

## Claims

1. A generating method of generating electronic program guide menu of a television, comprising the following steps:
in a first step, providing a main tuner for receiving a first television signal of a current channel and providing at least one vice tuner for receiving at least one second television signal of at least one browsing channel;
in a second step, generating an electronic program guide menu comprising a program picture of the current channel and at least one program picture of the at least one browsing channel according to the first television signal and the second television signal.

2. The generating method as claimed in claim 1, wherein the electronic program guide menu further comprises a program information of the current channel and a program information of the at least one browsing channel.

3. The generating method as claimed in claim 1, wherein the step of providing at least one vice tuner for receiving at least one second television signal of at least one browsing channel comprises:
inputting a frequency data of the browsing channels to the vice tuner sequentially, and receiving the television signals of the browsing channels via the vice tuner sequentially.

4. The generating method as claimed in claim 3, wherein the program picture of the browsing channels displayed in the electronic program guide menu is capable of being updated according to the at least one second television signal received by the vice tuner.

5. The generating method as claimed in claim 1, wherein the first step comprises providing a main tuner for receiving the first television signal of the current channel, and providing at least two of the vice tuners for receiving the second television signals of at least two of the browsing channels respectively; the second step comprises generating the electronic program guide menu comprising the program picture of the current channel and the program pictures of the at least two browsing channels according to the first television signal and the second television signals of the at least two browsing channels.

6. A television, comprising:
a storage for storing frequency data of a current channel and frequency data of at least one browsing channel;
a main tuner for receiving the frequency data and a first television signal of the current channel;
a vice tuner for receiving the frequency data and at least one second television signal of the at least one browsing channel;
a micro control unit for reading the frequency data of the current channel from the storage and outputting the frequency data of the current channel to the main tuner, and reading the frequency data of the at least one browsing channel from the storage and outputting the frequency data of the at least one browsing channel to the vice tuner; and
an electronic program guide menu generating module;
the micro control unit further outputting program picture of the current channel and program picture of the at least one browsing channel to the electronic program guide menu generating module, and controlling the electronic program guide menu generating module to generate an electronic program guide menu.

7. The television as claimed in claim 6, wherein the television comprises at least two browsing channels and at least two vice tuners, the micro control unit reads the frequency data of the at least two browsing channels from the storage and outputs the frequency data to the at least two vice tuners respectively, the at least two vice tuners receives television signals of the at least two browsing channels respectively, and the electronic program guide menu comprises the program pictures of the at least two browsing channels.

8. The television as claimed in claim 7, wherein the micro control unit is further used for reading the frequency data of the at least two subsequent to-be-browsed channels and outputting the frequency data of the at least two subsequent to-be-browsed channels to the at least two vice tuners respectively, the electronic program guide generating module is further used for updating the electronic program guide menu by replacing the program pictures of the at least two browsing channels with those of the at least two subsequent to-be-browsed channels respectively.

9. The television as claimed in claim 6, wherein the micro control unit is further used for obtaining program information of the current channel and program information of the at least one browsing channel, and the electronic program guide menu further displays the program information of the current channel and the at least one browsing channel.

10. The television as claimed in claim 6, wherein the micro control unit is further used for outputting the frequency data of the at least one browsing channel to the main tuner to allow the at least one second television signal to be received by the main tuner based on a channel switching control command.
